(19)

Europäisches
Patentamt
European
Patent Office
Office européen
des brevets

(11) **EP 2 180 356 A1**

(12) **EUROPEAN PATENT APPLICATION**

(43) Date of publication:
**28.04.2010 Bulletin 2010/17**

(51) Int Cl.:
***G02B 1/11*** (2006.01)     *G02B 1/10* (2006.01)

(21) Application number: **09013345.5**

(22) Date of filing: **22.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **24.10.2008 JP 2008273992**

(71) Applicant: **Seiko Epson Corporation Tokyo 163-0811 (JP)**

(72) Inventors:
• **Noguchi, Takashi**
 **Suwa-shi**
 **Nagano 392-8502 (JP)**

• **Nishimoto, Keiji**
 **Suwa-shi**
 **Nagano 392-8502 (JP)**
• **Fukui, Tomohito**
 **Suwa-shi**
 **Nagano 392-8502 (JP)**

(74) Representative: **HOFFMANN EITLE Patent- und Rechtsanwälte Arabellastrasse 4 81925 München (DE)**

(54) **Optical article and method for manufacturing the same**

(57)     An optical article includes an anti-reflection layer on a substrate, wherein the anti-reflection layer is formed of nine layers obtained by alternately stacking low refractive index layers and high refractive index layers, the layer closest to the substrate among the high and low refractive index layers that form the anti-reflection layer is called a first layer and the numbers of the following layers are incremented by one so that the odd-numbered layers are low refractive index layers and the even-numbered layers are high refractive index layers, and at least one of the following equations is satisfied:

$$0.8\lambda_0 \leq \lambda_1 \leq 1.2\lambda_0 \quad (1)$$

$$0.8\lambda_0 \leq \lambda_3 \leq 1.2\lambda_0 \quad (2)$$

where $\lambda_0$ represents a design primary wavelength greater than or equal to 480 nm but smaller than or equal to 550 nm, and $\lambda_k$ represents the optical thickness of the corresponding one of the high and low refractive index layers (k represents the layer number).

FIG. 1

EP 2 180 356 A1

**Description**

BACKGROUND

1. Technical Field

The present invention relates to an optical article with an anti-reflection layer on a substrate and a method for manufacturing the same.

2. Related Art

In general, a hard coat layer and an anti-reflection layer are provided on a surface of an ophthalmic plastic lens to prevent the surface from being scratched. The hard coat layer is formed on a surface of a lens substrate, and the anti-reflection layer is formed on the surface of the hard coat layer. A typical example of the anti-reflection layer is what is called an anti-reflection layer formed by alternately stacking materials having different refractive indices.
A known anti-reflection layer of this type includes low refractive index layers and high refractive index layers the total thickness of which is large (see JP-A-2003-294906, for example). According to JP-A-2003-294906, the anti-reflection layer provides good durability because the internal stress is inclined in the compressive direction.
However, even the ophthalmic lens described in JP-A-2003-294906 does not always provide sufficient scratch resistance.

SUMMARY

An advantage of some aspects of the invention is to provide an optical article having excellent scratch resistance and a method for manufacturing the same.
According to an aspect of the invention, an optical article including an anti-reflection layer on a substrate is provided. The anti-reflection layer is formed of nine layers obtained by alternately stacking low refractive index layers and high refractive index layers. The layer closest to the substrate among the high and low refractive index layers that form the anti-reflection layer is called a first layer, and the numbers of the following layers are incremented by one so that the odd-numbered layers are low refractive index layers and the even-numbered layers are high refractive index layers. At least one of the following equations is satisfied:

$$0.8\lambda_0 \le \lambda_1 \le 1.2\lambda_0 \quad (1)$$

$$0.8\lambda_0 \le \lambda_3 \le 1.2\lambda_0 \quad (2)$$

where $\lambda_0$ represents a design primary wavelength greater than or equal to 480 nm but smaller than or equal to 550 nm, and $\lambda_k$ represents the optical thickness of the corresponding one of the high and low refractive index layers (k represents the layer number).
In this case, since at least one of the first and third layers is formed to have an optical thickness greater than or equal to $0.8\lambda_0$ but smaller than or equal to $1.2\lambda_0$, the scratch resistance of the anti-reflection layer can be drastically improved.
It is preferable that the low refractive index layers are made of a silicon oxide.
In this case, since the low refractive index layers contain a silicon oxide, the scratch resistance can be drastically improved.
It is preferable that the high refractive index layers are made of a zirconium oxide.
In this case, since the high refractive index layers contain a zirconium oxide, the high refractive index layers can be hard. The scratch resistance can therefore be drastically improved.
It is preferable that the substrate is made of a plastic.
In this case, since the substrate is made of a plastic, a plastic optical article having drastically improved scratch resistance can be provided.
It is preferable that the optical article is a plastic lens.
In this case, since the anti-reflection layer described above is formed on the lens substrate, a plastic lens with high scratch resistance can be provided.

According to another aspect of the invention, a method for manufacturing the optical article described above is provided. The method includes forming the high and low refractive index layers by deposition. The high refractive index layers are formed by ion-assisted deposition.

In this case, since the high refractive index layers are formed by an ion-assisted method, the density of each of the high refractive index layers can be effectively increased, whereby the scratch resistance can be drastically improved.

BRIEF DESCRIPTION OF THE DRAWINGS

The invention will now be described with reference to the accompanying drawings, wherein like numbers reference like elements.

Fig. 1 is a schematic cross-sectional view showing an ophthalmic plastic lens according to an embodiment of the invention.

Fig. 2 is a schematic view showing a deposition apparatus in the embodiment.

DESCRIPTION OF EXEMPLARY EMBODIMENTS

An embodiment of the invention will be described below.

An optical article in the present embodiment is an ophthalmic plastic lens.

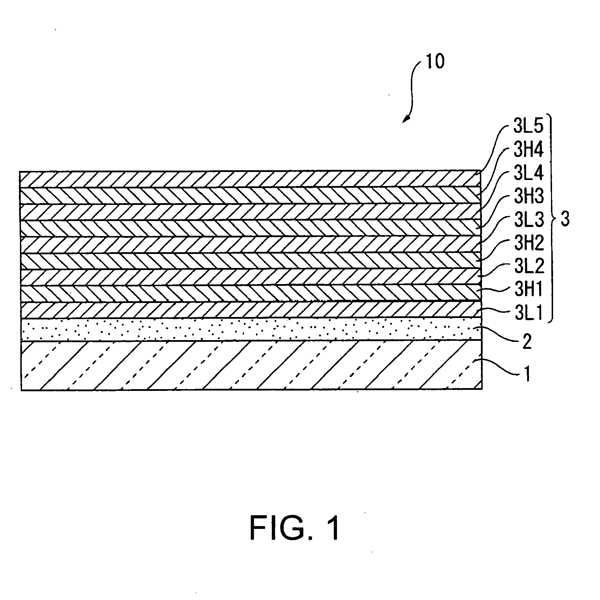

Fig. 1 is a schematic cross-sectional view showing an ophthalmic plastic lens 10 according to the present embodiment. A hard coat layer 2 is provided on a surface of a substrate 1 of the ophthalmic plastic lens 10 to prevent the surface from being scratched. An anti-reflection layer 3, which is an optical multilayer formed of nine layers, is provided on the surface of the hard coat layer 2.

1. Substrate

The embodiment of the invention will be described below with reference to the drawings.

The substrate 1 is made of, for example, any of a transparent plastic, such as an acrylic resin, a thiourethane resin, a methacrylic resin, an allyl resin, an episulfide resin, polycarbonate, polystyrene, diethylene glycol bis-allyl carbonate (CR-39), polyvinyl chloride, and a halogen-containing copolymer, preferably a sulfur-containing copolymer.

The refractive index of the substrate 1 is preferably 1.6 or higher. In particular, an allyl carbonate resin, an acrylate resin, a methacrylate resin, a thiourethane resin, and an episulfide resin are preferred. Among the above materials, a thiourethane resin or an episulfide resin is particularly preferred in terms of the refractive index.

2. Hard coat layer

The hard coat layer 2 is made of an organic material alone, an inorganic material alone, or an organic-inorganic composite material. Among the above materials, a composite material is preferred considering that excellent hardness is achieved and the refractive index can be adjusted. Adjusting the refractive indices of the hard coat layer 2 and the substrate 1 to be substantially the same can prevent not only interference fringes resulting from reflection at the interface between the hard coat layer 2 and the substrate 1 but also decrease in transmittance.

Specifically, a hard coat solution for forming the hard coat layer 2 preferably contains the following components (A) and (B), because the resultant cured hard coat layer can be sufficiently hard. The hard coat layer may be part of the lens substrate in some cases. The component (A) is an organic silicon compound expressed by a general formula $R^1SiX^1_3$ (in the formula, $R^1$ represents an organic group including a polymerizable reactive group, for example, a hydrocarbon radical with one to six carbons, and $X^1$ represents a hydrolyzable group), and the component (B) is inorganic oxide particles containing a titanium oxide having a rutile crystal structure.

The component (B) is preferably rutile-type titanium oxide particles having a diameter ranging from 1 to 200 $\mu$m. From the viewpoint of adjusting the refractive index, the composite material of the hard coat layer is preferably formed by combining the particles described above with metal oxide particles made of silicon, tin, zirconium, or antimony and having a diameter ranging from 1 to 200 $\mu$m, or composite oxide particles made of the above elements.

When titanium is used as the inorganic material, it is preferable to use titanium oxide particles having a rutile crystal structure or composite oxide particles having a structure in which silicon dioxide surrounds a titanium oxide in order to prevent reduction in light resistance of the hard coat layer 2 and the substrate 1 due to the optical activity of titanium (specifically, transmittance reduction resulting from yellowing and layer separation resulting from interface degradation). The thickness of the hard coat layer 2 preferably ranges from 0.5 to 10 $\mu$m in terms of scratch resistance.

A primer layer may be provided at the interface between the substrate 1 and the hard coat layer 2 to provide intimate adhesion between the substrate 1 and the hard coat layer 2.

3. Anti-reflection layer

As shown in Fig. 1, the anti-reflection layer 3 has a nine-layer structure in which low refractive index layers 3L1, 3L2, 3L3, 3L4, and 3L5 and high refractive index layers 3H1, 3H2, 3H3, and 3H4 are alternately stacked.

Each of the low refractive index layers 3L1, 3L2, 3L3, 3L4, and 3L5 is a silicon oxide layer ($SiO_2$ layer) in the present embodiment.

Examples of the material that can be used to form the high refractive index layers 3H1, 3H2, 3H3, and 3H4 may include $ZrO_2$ (zirconium oxide), $Ta_2O_5$ (tantalum oxide), and $TiO_2$ (titanium oxide). A zirconium oxide layer used in the present embodiment is most preferable because it is hard and a small number of zirconium oxide layers can improve the scratch resistance to a target value.

An ion-assisted electron beam deposition apparatus is used to form the anti-reflection layer 3 on the substrate 1 or the hard coat layer 2. However, an ion-assisted electron beam deposition apparatus is not necessarily used to form the low refractive index layers.

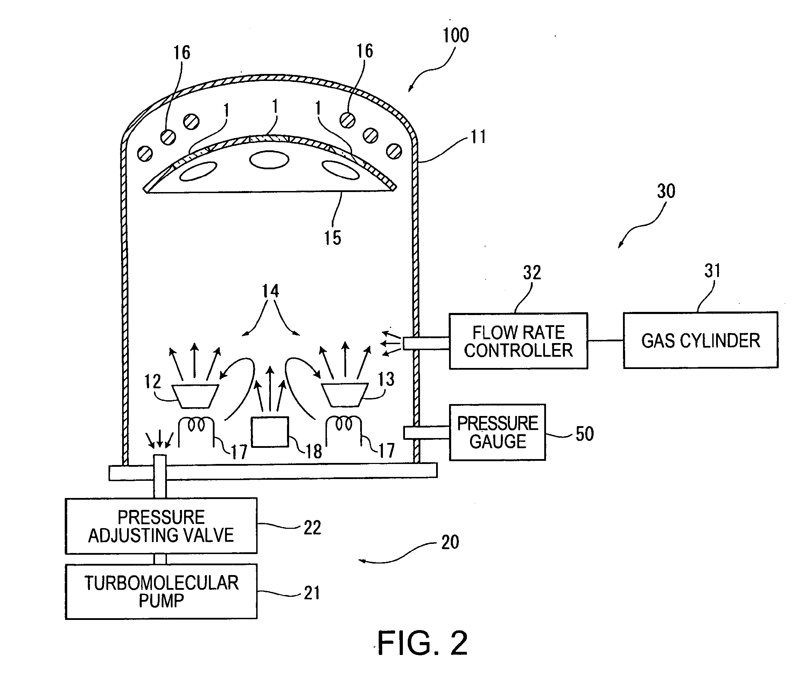

Fig. 2 diagrammatically shows a deposition apparatus 100 used to manufacture the anti-reflection layer 3 of the present embodiment. In Fig. 2, the deposition apparatus 100 includes a vacuum chamber 11, a discharger 20 having a turbomolecular pump 21 and a pressure adjusting valve 22, a gas supplier 30 having a gas cylinder 31 and a flow rate controller 32, and a pressure gauge 50 that indicates the pressure in the vacuum chamber 11.

The vacuum chamber 11 houses evaporation sources (crucibles) 12 and 13 in which evaporation materials are placed, a heating unit 14 for heating and melting (evaporating) the evaporation materials in the evaporation sources 12 and 13, a substrate support 15 on which substrates 1 are placed, substrate heaters 16 for heating the substrates 1, filaments 17, and an ion gun 18 for ionizing an introduced gas and accelerating the ionized gas so that the substrates 1 are irradiated with the ionized gas. The vacuum chamber 11 further includes as required a cold trap for removing moisture left in the vacuum chamber 11 and a device for controlling the film thickness.

The evaporation sources 12 and 13 are crucibles in which evaporation materials are placed, and disposed in a lower portion of the vacuum chamber 11.

In the heating unit 14, the ion gun 18 accelerates and deflects thermoelectrons emitted from the heated filaments 17 so that the evaporation materials placed in the evaporation sources 12 and 13 are irradiated with the thermoelectrons and hence evaporate. That is, what is called electron beam deposition occurs. The magnitude of the acceleration current is not particularly limited to a specific value, but can be adjusted in accordance with a necessary evaporation rate because the magnitude of the acceleration current closely relates to the evaporation rate.

Other examples of the method for evaporating an evaporation material include a method for melting/vaporizing an evaporation material by conducting current through a resistor made of tungsten or any other suitable material (what is called resistive thermal evaporation), and a method for applying high-energy laser light to a material to be evaporated.

The substrate support 15 is a support on which a predetermined number of substrates 1 are placed, and disposed in an upper portion that faces the evaporation sources 12 and 13 in the vacuum chamber 11. The substrate support 15 preferably includes a rotation mechanism in order to make the anti-reflection layer 3 to be formed on each of the substrates 1 uniform and increase manufacturability.

Each of the substrate heaters 16 is formed of, for example, an infrared lamp and disposed above the substrate support 15. The substrate heaters 16 heat the substrates 1 to degas or dewater them so that a layer to be formed on the surface of each of the substrates 1 intimately adheres thereto.

The infrared lamp may be replaced with a resistive heater or any other suitable heater. It is noted, however, that an infrared lamp is preferably used for plastic substrates 1.

Substrates 1 on each of which the hard coat layer 2 has been formed are placed on the substrate support 15 in the vacuum chamber 11 described above, and the deposition apparatus 100 is operated to form the anti-reflection layer 3.

The evaporation is preferably performed under the following conditions: the acceleration voltage ranges from 700 to 1000 V and the acceleration current ranges from 500 to 1200 mA.

The thickness of the resultant film can be readily controlled by increasing or decreasing the acceleration voltage or the acceleration current and by extending or shortening the evaporation period.

An anti-contamination layer and/or an anti-haze layer may be formed on the anti-reflection layer 3 as required.

The present embodiment provides the following advantages:

Since the number of layers that form the anti-reflection layer 3 is nine and the low refractive index layer 3L1 or 3L3 is formed to an optical thickness greater than or equal to $0.8\lambda_0$ but smaller than or equal to $1.27\lambda_0$, the scratch resistance of the anti-reflection layer 3 can be drastically improved. As a result, the resultant ophthalmic plastic lens 10 has excellent scratch resistance.

Since the high refractive index layers 3H1, 3H2, 3H3, and 3H4, which form the anti-reflection layer 3, are made of zirconium oxide, the high refractive index layers can be hard. As a result, the resultant anti-reflection layer can be more scratch resistant.

Since the high refractive index layers, which form the anti-reflection layer 3, are formed by ion-assisted vacuum deposition, the density of each of the high refractive index layers can be effectively increased. As a result, the scratch resistance of the anti-reflection layer 3 can be drastically improved.

While the best configuration, method, and other factors for carrying out the invention have been disclosed in the above description, the invention is not limited thereto.

That is, while the invention has been specifically illustrated and described primarily with reference to a particular embodiment, a variety of changes can be made by the skilled in the art to the embodiment described above in terms of shape, material, number, and other detailed configurations without departing from the scope of the technical spirit and object of the invention.

That is, the description disclosed above in which the shapes, materials, and other factors are limited to specific ones is presented by way of example for easier understanding of the invention, but is not intended to limit the invention. The invention therefore encompasses a description made by using the names of the members that are not partially or entirely limited to the above shapes, materials, and other factors.

In the present embodiment, $ZrO_2$ used as the material of the high refractive index layers may be replaced with, for example, $TiO_2$, $Ta_2O_5$, or $Nb_2O_5$.

Examples

Examples of the invention will be described below. The invention is, however, not limited to the following examples, but encompasses, for example, variations and improvements to the extent that they achieve the object of the invention. The reference characters are the same as those used in the embodiment described above.

Specifically, an ophthalmic plastic lens 10 with an anti-reflection layer 3 and other layers was manufactured and evaluated in terms of scratch resistance, as shown in the following paragraphs.

Example 1

Manufacturing ophthalmic plastic lens

Forming hard coat layer

A hard coat solution was prepared by mixing 1360 grams of propylene glycol monomethyl ether, 6450 grams of methanol-dispersed titanium dioxide-zirconium dioxide-silicon dioxide composite fine particle sol (Trade Name "Optolake 1120Z (S-7/A8), solid concentration: 20% by weight" manufactured by Catalysts and Chemicals Ltd.), and 1700 grams of γ-glycidoxypropyltrimethoxysilane, dropping 500 grams of 0.05N hydrochloric acid aqueous solution to the mixed solution while stirring the mixture at the same time, stirring the mixture for four hours, aging it for a full day, adding 10 grams of Fe(III)-acetylacetonato and 3 grams of silicon-based surfactant (Trade Name "L-7001" manufactured by Nippon Unicar Company Limited), stirring the mixture for four hours, and aging it for a full day.

The resultant hard coat solution was applied in a dipping method to an ophthalmic lens (Seiko Super sovereign lens material manufactured by SEIKO EPSON CORPORATION) having a refractive index of 1.67 and having undergone an alkali treatment. The lifting rate was 20 cm/min. The ophthalmic lens to which the hard coat solution had been applied was air-dried at 80°C for 20 minutes and baked at 130°C for 120 minutes. A hard coat layer 2 was thus formed.

Forming anti-reflection layer

The deposition apparatus 100 shown in Fig. 2 was used to form the anti-reflection layer 3 on the surface of the thus obtained hard coat layer 2. Table 1 shows the optical thickness of the anti-reflection layer 3. The anti-reflection layer 3 was formed of nine layers in total obtained by sequentially stacking low refractive index layers and high refractive index layers on the hard coat layer 2.

The low refractive index layers were made of a silicon oxide, and the high refractive index layers were made of a zirconium oxide. The degree of vacuum at which the low refractive index layers and the high refractive index layers were deposited by ion-assisted deposition was $8.0 \times 10^{-4}$ Pa and $6.0 \times 10^{-3}$ Pa, respectively. The ion-assisted deposition was performed under the following conditions: the acceleration voltage was 800 V; the acceleration current was 250 mA; and the oxygen gas flow rate was 20 sccm.

The optical thickness of the low refractive index layer 3L1, which is the first layer, is $1.000\lambda_0$, which is the thickest of the nine layers. Table 1 shows the optical thickness of the anti-reflection layer 3.

Forming anti-contamination layer

A fluorine-containing organic silicon compound (Trade Name KY-130) manufactured by Shin-Etsu Chemical Co., Ltd. was used. The KY-130 was diluted with a fluorine-based solvent (Novec HFE-7200 manufactured by Sumitomo 3M Limited) so that a solution having a solid concentration of 3% by weight was prepared. The solution was impregnated into 1 gram of pellet made of a porous ceramic, and the impregnated pellet was dried. The resultant pellet was used as an evaporation source.

The evaporation source was placed in the deposition apparatus 100 shown in Fig. 2, and heated with a halogen lamp so that the fluorine-containing organic silicon compound was evaporated. An anti-contamination layer was thus formed on the anti-reflection layer 3.

Example 2

In Example 2, the optical thickness of the low refractive index layer 3L2, which is the third layer, was $1.16\lambda_0$, which was the thickest of the nine layers. The other manufacturing conditions were the same as those in Example 1. Table 1 shows the optical thickness of the anti-reflection layer 3.

Comparative Example 1

In Comparative Example 1, low refractive index layers and high refractive index layers were alternately stacked on the hard coat layer 2 to form an anti-reflection layer 3 formed of five layers in total. In Comparative Example 1, the low refractive index layer 3L1, which is the first layer, is $0.43\lambda_0$ in thick, which is thickest of the five layers but smaller than one-half the optical thickness of the low refractive index layer 3L1, which is the first layer, in Example 1.

In Comparative Example 1, the anti-reflection layer 3 was formed by vacuum deposition instead of ion-assisted deposition. The other manufacturing conditions were the same as those in Example 1. Table 1 shows the thickness of each of the layers that form the anti-reflection layer 3.

Comparative Example 2

In Comparative Example 2, the anti-reflection layer 3 is formed of five layers in total as in the case of Comparative Example 1, and the optical thickness of each of the layers that form the anti-reflection layer 3 is the same as that in Comparative Example 1. The other manufacturing conditions are the same as those in Example 1. Table 1 shows the thickness of each of the layers that form the anti-reflection layer 3.

Table 1

| | Number of layers | Optical thickness of anti-reflection layer | | | | | | | | |
|---|---|---|---|---|---|---|---|---|---|---|
| | | $\lambda_1$ | $\lambda_2$ | $\lambda_3$ | $\lambda_4$ | $\lambda_5$ | $\lambda_6$ | $\lambda_7$ | $\lambda_8$ | $\lambda_9$ |
| Example 1 | 9 | $1.000\lambda_0$ | $00.13\lambda_0$ | $0.06\lambda_0$ | $0.005\lambda_0$ | $0.02\lambda_0$ | $0.005\lambda_0$ | $0.13\lambda_0$ | $0.28\lambda_0$ | $0.25\lambda_0$ |
| Example 2 | 9 | $0.13\lambda_0$ | $0.01\lambda_0$ | $0.16\lambda_0$ | $0.13\lambda_0$ | $0.07\lambda_0$ | $0.05\lambda_0$ | $0.01\lambda_0$ | $0.20\lambda_0$ | $0.36\lambda_0$ |
| Comparative example 1 | 5 | $0.43\lambda_0$ | $0.13\lambda_0$ | $0.06\lambda_0$ | $0.25\lambda_0$ | $0.25\lambda_0$ | - | - | - | - |
| Comparative example 2 | 5 | $0.43\lambda_0$ | $0.13\lambda_0$ | $0.06\lambda_0$ | $0.25\lambda_0$ | $0.25\lambda_0$ | - | - | - | - |
| Reference character $\lambda_0$ represents a design central wavelength and is equal to 500 nm. | | | | | | | | | | |

Evaluation method

The following method was used to measure the scratch resistance of the ophthalmic plastic lens 10.

Scratch resistance test

A Bayer tester manufactured by COLTS Laboratories was used to scratch test samples produced in Examples 1 and 2 and Comparative Examples 1 and 2 under the manufacturing conditions described above and a standard lens (CR39 manufactured by SUNLUX), the test samples and the standard lens scratched by reciprocating a medium weighing 500 grams 600 times (which is a standard condition specified by COLTS Laboratories).

A haze value H of each of the scratched ophthalmic plastic lenses 10 was measured (by a tester, an automatic haze computer manufactured by Suga Test Instruments Co., Ltd.) to determine a Bayer value R by using the following calculation equation. The scratch resistance was thus evaluated.

$$R = -\frac{H_{ST(post-test)} - H_{ST(pre-test)}}{H_{SA(post-test)} - H_{SA(pre-test)}}$$

In the equation, character R represents a Bayer value; character H represents a haze value; character ST represents the standard lens; and character SA represents a tested ophthalmic lens. That is, a large Bayer value R means good scratch resistance.

Evaluation results

Scratch resistance test

Table 2 shows results of the scratch resistance test.

Table 2

|  | Bayer value R | Deposition method |
|---|---|---|
| Example 1 | 14.70 | Ion-assisted |
| Example 2 | 14.50 | Ion-assisted |
| Comparative example 1 | 8.01 | No ion-assisted |
| Comparative example 2 | 9.32 | Ion-assisted |

The results show that Examples 1 and 2 both provide good scratch resistance represented by Bayer values R greater than or equal to 14.0.

The results also show that Comparative Examples 1 and 2, in contrast, both provide Bayer values R smaller than 10.0, which represents poorer scratch resistance than that provided in Examples 1 and 2. The results further show that forming a film by ion-assisted deposition is preferable in terms of scratch resistance.

The invention is applicable not only to an ophthalmic plastic lens, but also to anti-reflective dustproof glass, anti-reflective dustproof quartz, an anti-reflective condenser lens, an anti-reflective prism, an anti-reflective optical disk, an anti-reflective display, an anti-reflective solar cell, and an optical isolator.

**Claims**

1. An optical article comprising an anti-reflection layer on a substrate,
   wherein the anti-reflection layer is formed of nine layers obtained by alternately stacking low refractive index layers and high refractive index layers,

   the layer closest to the substrate among the high and low refractive index layers that form the anti-reflection layer is called a first layer and the numbers of the following layers are incremented by one so that the odd-numbered layers are low refractive index layers and the even-numbered layers are high refractive index layers, and
at least one of the following equations is satisfied:

$$0.8\lambda_0 \leq \lambda_1 \leq 1.2\lambda_0 \quad (1)$$

$$0.8\lambda_0 \leq \lambda_3 \leq 1.2\lambda_0 \quad (2)$$

where $\lambda_0$ represents a design primary wavelength greater than or equal to 480 nm but smaller than or equal to 550 nm, and $\lambda_k$ represents the optical thickness of the corresponding one of the high and low refractive index layers (k represents the layer number).

2. The optical article according to claim 1,
   wherein the low refractive index layers are made of a silicon oxide.

3. The optical article according to claim 1 or 2,
   wherein the high refractive index layers are made of a zirconium oxide.

4. The optical article according to any one of the preceding claims,
   wherein the substrate is made of a plastic.

5. The optical article according to any one of the preceding claims,
   wherein the optical article is a plastic lens.

6. A method for manufacturing the optical article according to any one of the preceding claims, the method comprising:

   forming the high and low refractive index layers by deposition,

   wherein the high refractive index layers are formed by ion-assisted deposition.

FIG. 1

FIG. 2

Europäisches
Patentamt

European
Patent Office

Office européen
des brevets

# EUROPEAN SEARCH REPORT

**Application Number**

EP 09 01 3345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 725 959 A (TERADA JUNJI [JP] ET AL) 10 March 1998 (1998-03-10) <br> * abstract * <br> * column 2, line 36 - line 65 * <br> * column 3, line 9 * <br> * table 4 * <br> * column 15, line 4 - line 23 * <br> ----- | 1-6 | INV. <br> G02B1/11 <br><br> ADD. <br> G02B1/10 |
| X | US 2003/218798 A1 (KANAZAWA HIDEHIRO [JP] ET AL) 27 November 2003 (2003-11-27) <br> * abstract * <br> * paragraphs [0017], [0078] * <br> ----- | 1-6 | |
| A | EP 0 529 268 A2 (LEYBOLD AG [DE]) 3 March 1993 (1993-03-03) <br> * abstract * <br> * column 5, line 9 - column 6, line 42 * <br> * figure 3 * <br> ----- | 1-6 | |
| A | JP 2003 131010 A (HITACHI LTD) 8 May 2003 (2003-05-08) <br> * abstract * <br> ----- | 1-6 | TECHNICAL FIELDS SEARCHED (IPC) <br><br> G02B |
| A | WO 02/04374 A2 (FRAUNHOFER GES FORSCHUNG [DE]; SCHULZ ULRIKE [DE]; KAISER NORBERT [DE]) 17 January 2002 (2002-01-17) <br> * the whole document * <br> ----- | 1-6 | |

The present search report has been drawn up for all claims

| Place of search | Date of completion of the search | Examiner |
|---|---|---|
| Munich | 7 January 2010 | Girardin, François |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 01 3345

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2010

| Patent document cited in search report | | Publication date | Patent family member(s) | | Publication date |
|---|---|---|---|---|---|
| US 5725959 | A | 10-03-1998 | NONE | | |
| US 2003218798 | A1 | 27-11-2003 | JP | 4065530 B2 | 26-03-2008 |
| | | | JP | 2004046079 A | 12-02-2004 |
| | | | US | 2005219684 A1 | 06-10-2005 |
| EP 0529268 | A2 | 03-03-1993 | CA | 2076094 A1 | 01-03-1993 |
| | | | DE | 4128547 A1 | 04-03-1993 |
| | | | ES | 2094257 T3 | 16-01-1997 |
| | | | JP | 5196803 A | 06-08-1993 |
| JP 2003131010 | A | 08-05-2003 | NONE | | |
| WO 0204374 | A2 | 17-01-2002 | AT | 418740 T | 15-01-2009 |
| | | | DE | 10034158 A1 | 07-02-2002 |
| | | | EP | 1307767 A2 | 07-05-2003 |
| | | | US | 2002136877 A1 | 26-09-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003294906 A